# EUROPEAN PATENT APPLICATION

(11) **EP 2 381 526 A1**
(43) Date of publication of application: **26.10.2011**
(21) Application number: 09838314.4
(22) Date of filing: 19.01.2009
(51) Int. Cl.: H01P 5/18, H04B 1/04

(54) **DIRECTIONAL COUPLER AND WIRELESS COMMUNICATION APPARATUS COMPRISING THEREOF**

(71) Applicant: Sumitomo Electric Industries, Ltd., Chuo-ku Osaka-shi Osaka 541-0041 (JP)
(72) Inventor: TOTANI, Kazuyuki, Osaka-shi Osaka 554-0024 (JP); HIRATA, Hitoshi, Osaka-shi Osaka 554-0024 (JP)
(74) Representative: Cross, Rupert Edward Blount
(86) International application number: PCT/JP2009/050632
(87) International publication number: WO 2010/082346

(57) **Abstract**

The present invention relates to a directional coupler 1 structured with a microstripline 20 including a main line 2 having an input port P1 and an output port P2, and a sub line 3 having a coupling port P3 and an isolation port P4. The sub line 3 is made of a high impedance line 4 narrower than the main line 2. The high impedance line 4 has first coupling lines 5A and 5B and a second coupling line 6 each extending in parallel to the main line 2. The distance between the first coupling lines 5A and 5B and the main line 2 is smaller than the distance between the second coupling line 6 and the main line 2.

## Description

### TECHNICAL FIELD

The present invention relates to a directional coupler which is indispensable to wireless communication technology for exerting transmission power control, and to a wireless communication apparatus having installed therein the directional coupler.

### BACKGROUND ART

For example, a high output power amplifier of a transmission system in a wireless communication apparatus which exerts transmission power control is provided with a directional coupler (coupler) for monitoring the output power thereof. The output of the transmission-side amplifier is connected to a transceiver antenna. Here, the reflected power of the antenna fluctuates depending on wild birds, natural obstacles and others.
Further, in recent years, feedback of radio wave energy from adjacent antennas such as array antennas, MIMO (Multiple Input Multiple Output) antennas and the like is not negligible.

Accordingly, in order to reduce the effect of reflected power from such antennas, the output power monitor requires a directional coupler which possesses the high isolation characteristic. Further, for a recent wireless communication apparatus which supports high-speed communication, the wide-band characteristic is a prerequisite condition.
As a directional coupler for achieving such a high isolation characteristic, a coaxial coupler circuit or a stripline circuit is commonly in use.

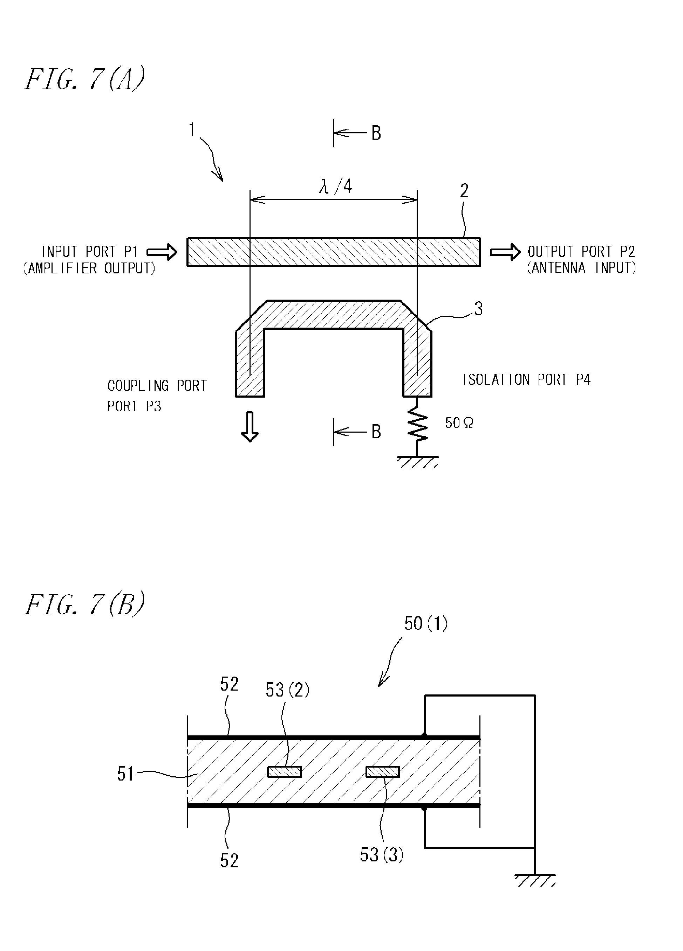

Fig. 7 is a schematic configuration diagram of a conventional directional coupler 1 structured with striplines, in which (A) is a plan view of the coupler 1, and (B) is a cross sectional view taken along line B-B.
As used herein, as shown in Fig. 7 (B), a stripline 50 refers to a transmission path, whose cross sectional structure includes a plate-like dielectric substrate 51 provided with conductive foils 52 and 52 on its both the front and back surfaces, inside which substrate 51 linear conductive foils 53 are formed. The stripline 50 corresponds to a form obtained by cutting both sides of the external conductor of a coaxial cable so as to be two conductive foils, and by stretching out the internal conductor into a foil-like shape.

As shown in Fig. 7(A), the directional coupler 1 includes a main line 2 and a sub line 3 disposed to have an interval from each other, and each made of the linear conductive foil 53.
The main line 2 has an input port P1 to which the output of an amplifier is input, and an output port P2 connected to the antenna side. On the other hand, the sub line 3 has a coupling port P4 and an isolation port P4. Of these, output for monitoring is acquired from the coupling port P4.

It is to be noted that, with the directional coupler 1 made up of the striplines, normally, when the wavelength of an amplifier output signal is λ, the coupled length of the sub line 3 to the main line 2 is set to λ/4.
The directional coupler 1 made up of the striplines shown in Fig. 7 is capable of propagating a signal with the TEM mode (Transverse Electromagnetic mode) in which the propagation direction components in the electric and magnetic fields are zero. With the TEM mode, signals of all the frequencies ranging from DC to high frequency wave can be propagated.

Further, the TEM mode is advantageous in that no waveform distortion of the signal occurs, because it is free of frequency dispersion.
As described above, because the stripline is capable of carrying out signal transmission in the TEM mode, the directional coupler 1 possessing wide-band and high isolation characteristics can be structured therewith. On the other hand, because it necessitates formation of patterns of the conductive foils 52 and 53 of the three layers, i.e., the front surface, the back surface and the inside, the manufacturing process becomes complicated.

Accordingly, generally, in a case where the directional coupler 1 is installed in a high frequency circuit also, what is frequently used is a microstripline which is equivalent to a halved stripline structure (a plate-like dielectric substrate having a conductive foil formed on its back surface, and having a linear conductive foil formed on its front surface).
On the other hand, with the microstripline, the conductor formed on the dielectric substrate is in contact with the air differing in permittivity. Hence, the conductor is in contact with media of two types, and a perfect TEM mode is not established.

Such a transmission mode slightly deviating from the TEM mode is referred to as the quasi-TEM mode. In the quasi-TEM mode, there are higher order modes other than the mode corresponding to the TEM. Accordingly, there is a problem that it is difficult to implement a directional coupler possessing the wide-band and high isolation characteristics with the microstripline.
Accordingly, as a prior technique for solving the problem, what is known is a directional coupler made of the microstripline, in which a capacitor element is connected between the coupling port of the sub line and ground, and an inductor element and a resistor element are connected in series between the termination side of the sub line and the ground. Values of those elements are set so as to improve the isolation characteristic within the operating frequency band (Japanese Unexamined Patent Application Publication No. 2007-194870).

However, because this prior technique has the circuit configuration in which the elements are connected to the ports of the sub line, it is disadvantageous in an increase in size of the directional coupler. Additionally, it involves a problem that, because the characteristic values of those elements vary, it is difficult to achieve an appropriate isolation characteristic.
In view of the circumstances, an object of the present invention is to provide a directional coupler made of microstripline being simple in circuit configuration and capable of being miniaturized, and possessing the wide-band and high isolation characteristics, and a wireless communication apparatus having installed therein the same.

### DISCLOSURE OF THE INVENTION

The present invention provides a directional coupler, structured with a microstripline including a main line having an input port and an output port, and a sub line having a coupling port and an isolation port, wherein
the sub line is made of a high impedance line narrower than the main line, and
the high impedance line has a first coupling line and a second coupling line each extending in parallel to the main line, a distance between the first coupling line and the main line being smaller than a distance between the second coupling line and the main line.

According to the present invention, because the high impedance line structuring the sub line has the first coupling line and the second coupling line, it becomes possible to allow the nearer first coupling line to structure a portion where the electric field coupling to the main line is dominant, and to allow the farther second coupling line to structure a portion where the magnetic field coupling to the main line is dominant. This makes it possible to balance the inductance of the magnetic field current and the electric field current occurring in the sub line.
Accordingly, even with the microstripline whose mode is the quasi-TEM mode, similarly to the case with the TEM mode, a directional coupler possessing wide-band and high isolation characteristics can be structured.

In the present invention, preferably, the high impedance line structuring the sub line has an intermediate perpendicular line that extends in a direction perpendicular to the main line and that connects between an end of the first coupling line and an end of the second coupling line.
In this case, because the end of the first coupling line and that of the second coupling line are connected to each other by the intermediate perpendicular line extending in the direction perpendicular to the main line, it becomes possible to make the coupled length of the sub line to the main line (length in the main line direction) compact, and to miniaturize the directional coupler.

Further, in the present invention, the high impedance line structuring the sub line includes an impedance adjusting portion longer than a distance between the second coupling line and the main line. Preferably, the isolation port is provided at an end of the impedance adjusting portion.
In this case, because the impedance of the sub line can be adjusted by adjusting the length of the impedance adjusting portion, it becomes possible to absorb an impedance mismatch associated with variations in the width dimension of the high impedance line and the like.

The directional coupler of the present invention can suitably be used for a wireless communication apparatus including a transmission system that exerts a transmission power control. In this case, the directional coupler of the present invention for monitoring the transmission output of the high output power amplifier structuring the transmission system can be installed in the transmission and reception systems.

### BRIEF DESCRIPTION OF THE DRAWINGS

Fig. 1 (A) is a plan view showing a schematic structure of a directional coupler of the present invention, whereas(B) is a cross sectional view taken along line A-A thereof.
Fig. 2 is a functional block diagram of a wireless communication apparatus using the directional coupler of the present invention.
Fig. 3 is a plan view showing an installation example of the directional coupler of the present invention.
Fig. 4 is a graph showing the level characteristic of the directional coupler shown in Fig. 3.
Fig. 5 is a plan view of a directional coupler according to a variation of the present invention.
Fig. 6 is a plan view of a directional coupler according to another variation of the present invention.
Fig. 7(A) is a plan view showing the schematic structure of a conventional directional coupler, whereas(B) is a cross sectional view taken along line B-B thereof.

### BEST MODE FOR CARRYING OUT THE INVENTION

In the following, with reference to the drawings, a description will be given of an embodiment of the present invention.

### [Directional Coupler]

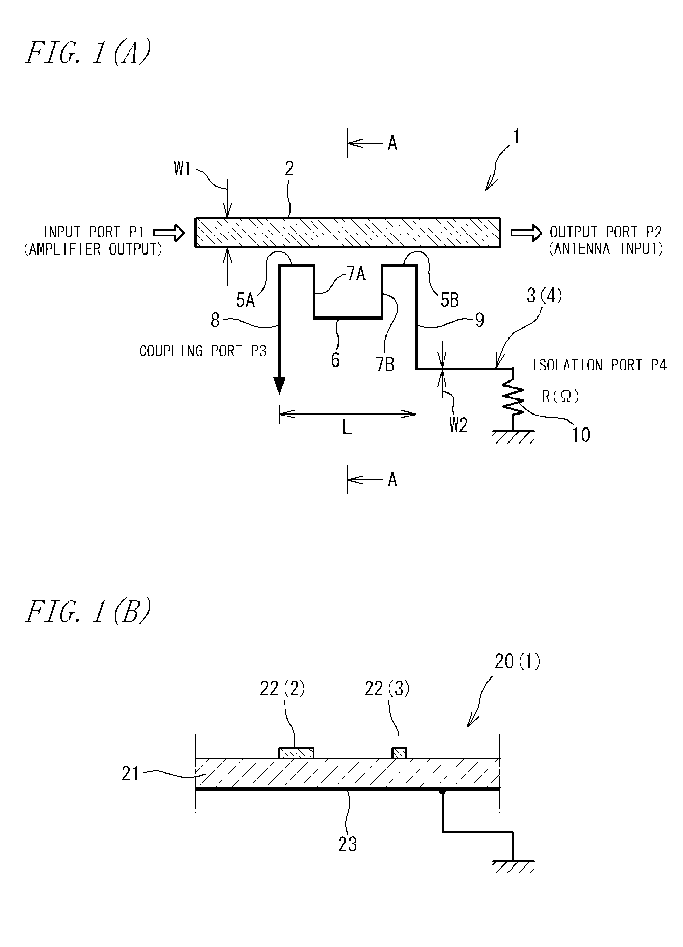

Fig. 1 is a schematic diagram of a directional coupler 1 according to one embodiment of the present invention, in which (A) is a plan view of the coupler 1, and(B)is a cross sectional view taken along line A-A.

The directional coupler 1 according to the present embodiment is structured with a distributed constant circuit made of a microstripline 20 to which a high output power amplifier 33 of a wireless communication apparatus 30, whose description will be given later, is installed.

As shown in Fig. 1 (B), the microstripline 20 is a plate-like dielectric substrate 21, having a conductive foil 23 formed on its back surface, and having a linear conductive foil 22 formed on its front surface. The conductive foil 23 on the back surface side is grounded.
As shown in Fig. 1(A), the directional coupler 1 according to the present embodiment includes a main line 2 having an input port P1 and an output port P2, and a sub line 3 having a coupling port P3 and an isolation port P4.

While the main line 2 and the sub line 3 are each made of the band-like conductive foil 22 formed to have a prescribed width, the sub line 3 is structured with a high impedance line 4 which is narrower than the main line 2.
A line width w2 of the high impedance line 4 is set to have a substantially very small dimension as compared to a line width w1 of the main line 2. For example, it is set to be approximately 25% as wide as the line width w1 of the main line 2.

The high impedance line 4 structuring the sub line 3 has first coupling lines 5A and 5B extending in parallel to the main line 2 at a nearer position, and a second coupling line 6 extending in parallel to the main line 2 at a farther position. That is, the first coupling lines 5A and 5B and the second coupling line 6 both extend in parallel to the main line 2, and the distance between the first coupling lines 5A and 5B and the main line 2 is smaller than the distance between the second coupling line 6 and the main line 2.
In the directional coupler 1 according to the present embodiment, the first coupling lines 5A and 5B nearer to the main line 2 are disposed to form a right and left pair and each being shorter than the second coupling line 6, whereas the second coupling line 6 farther from the main line 2 is disposed between the right and left paired second coupling lines 5A and 5B.

Further, the high impedance line 4 has intermediate perpendicular lines 7A and 7B that extend in a direction perpendicular to the main line 2, and that respectively connect between the ends of the first coupling lines 5A and 5B and the ends of the second coupling line 6.
Further, the high impedance line 4 has an end perpendicular line 8 extending from the left end of the left first coupling line 5A in the direction perpendicular to the main line 2. To the end of the perpendicular line 8, the coupling port P3 is connected.

Further, the high impedance line 4 structuring the sub line 3 has an impedance adjusting portion 9 that extends from the right end of the right first coupling line 5B in the direction perpendicular to the main line 2, and that is longer than the distance between the second coupling line 6 and the main line 2. To the end of the impedance adjusting portion 9, the isolation port P4 is connected. Between the isolation port P4 and the ground, a resistor 10 is connected.
As can be seen from the foregoing, in the present embodiment, a high impedance line 4 structuring the sub line 3 has, in order from the coupling port P3 side toward the isolation port P4, the end perpendicular line 8, the first coupling line 5A, the intermediate perpendicular line 7A, the second coupling line 6, the intermediate perpendicular line 7B, the first coupling line 5B, and the impedance adjusting portion 9.

It is to be noted that the coupled length L (total length of the first coupling lines 5A and 5B and the second coupling line 6) of the high impedance line 4 being the sub line 3 relative to the main line 2 is set to be λ/8 or less, when the wavelength of the amplifier output signal is λ.

With the directional coupler 1 having the structure described above, because the high impedance line 4 structuring the sub line 3 has the first coupling lines 5A and 5B which are nearer to the main line 2 and the second coupling line 6 which is farther from the main line 2, it becomes possible to allow the nearer first coupling lines 5A and 5B to structure a portion where the electric field coupling to the main line 2 is dominant, and to allow the farther second coupling line 6 to structure a portion where the magnetic field coupling to the main line 2 is dominant. This makes it possible to balance the inductance of the magnetic field current and the electric field current occurring in the sub line 3.

Accordingly, despite its being the directional coupler 1 made of the microstripline 20 whose mode is the quasi-TEM mode, the directional coupler 1 possessing the wide-band and high isolation characteristics can be structured, similarly to the case of the TEM mode.
Further, because the first coupling lines 5A and 5B and the second coupling line 6 are caused to balance the electromagnetic field occurring in the sub line 3, so as to improve the isolation characteristic, an additional advantage of avoiding an increase in size of the directional coupler 1 can be achieved, without the necessity of providing any capacitor element or inductor element employed in the aforementioned prior technique (Japanese Unexamined Patent Application Publication No. 2007-194870).

Further, with the directional coupler 1 according to the present embodiment, because the high impedance line 3 structuring the sub line 2 has the intermediate perpendicular lines 7A and 7B extending in the direction perpendicular to the main line 2 and connecting between the ends of the first coupling lines 5A and 5B and the ends of the second coupling line 6, it becomes possible to make the coupled length L of the sub line 3 compact, and to miniaturize the directional coupler 1.

Still further, with the directional coupler 1 according to the present embodiment, because the impedance adjusting portion 9 being longer than the distance between the second coupling line 6 and the main line 2 is provided, and the isolation port P4 is provided at the end of the adjusting portion 9, it becomes possible to adjust the impedance of the sub line 3 by adjusting the length of the impedance adjusting portion 9, and to absorb an impedance mismatch associated with variations in the width dimension of the high impedance line 4 and the like.

It is to be noted that the embodiment disclosed herein is merely illustration of the present invention, and is not limiting. The scope of the present invention is not defined by the embodiment but by the claims, inclusive of any modification equivalent in terms and scope to the structure stated in the claims.
For example, in the embodiment described above, the first coupling lines 5A and 5B are provided two in number and the second coupling line 6 is provided one in number. However, they are just required to alternately be disposed, and combination of their number of pieces to be disposed can arbitrarily be set.

### [Wireless Communication Apparatus]

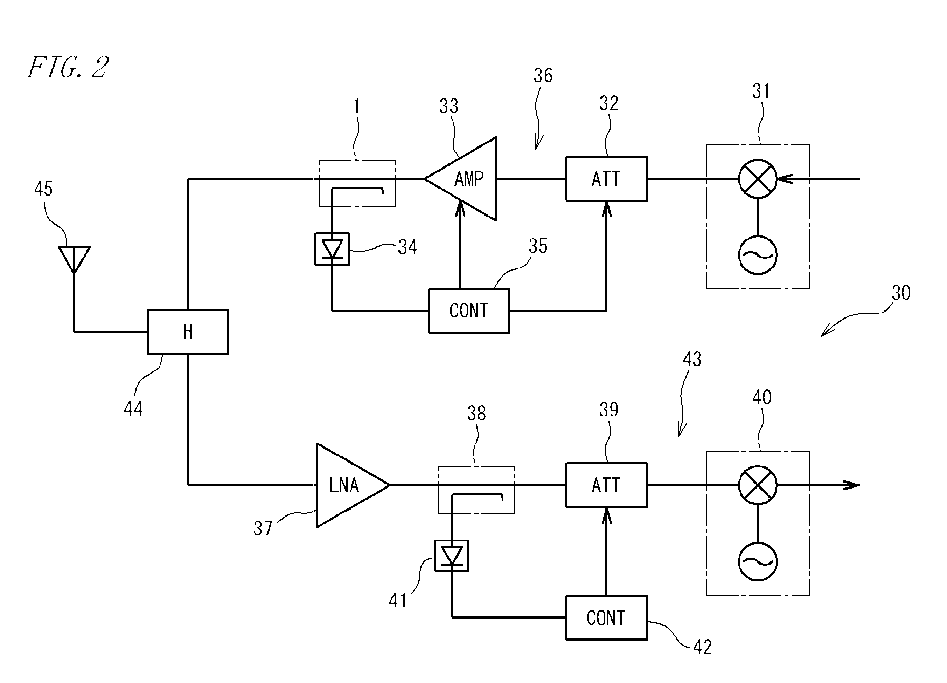

Fig. 2 is a functional block diagram of a wireless communication apparatus 30 using the directional coupler 1.
In Fig. 2, the wireless communication apparatus 30 according to the present embodiment can be used for a WiMAX (Worldwide Interoperability for Microwave Access) base station apparatus or a mobile terminal apparatus, for example, and is structured with a transmission system 36 including an up converter 31, an attenuator 32, a high output power amplifier 33, the directional coupler 1 according to the present embodiment, a detector 34, and a control unit 35, and a reception system 43 including a low-noise amplifier 37, a directional coupler 38, an attenuator 39, a down converter 40, a detector 41, and a control unit 42.

To the transmission system 36 and the reception system 43, a transceiver antenna 45 is connected via a hybrid circuit 44. Accordingly, a transmission signal has its frequency converted by the up converter 31, and thereafter, has its transmission level adjusted by the attenuator 32. Then, the signal is amplified by the high output power amplifier 33, and transmitted externally via the hybrid circuit 44 from the transceiver antenna 45.
On the other hand, a reception signal received by the transceiver antenna 45 is input to the reception system 43 via the hybrid circuit 44. The reception signal is amplified by the low-noise amplifier 37, and thereafter has its reception level adjusted by the attenuator 39. Then, the signal has its frequency converted by the down converter 40.

In the transmission system 36 of the wireless communication apparatus 30, a detection signal detected by the detector 34 via the directional coupler 1 according to the present embodiment is input to the control unit 35 on the transmission side. Based on the input detection signal, the control unit 35 exerts level adjustment to the attenuator 32 and control of gain to the high output power amplifier 33.
Further, in the reception system 43 of the wireless communication apparatus 30, a detection signal detected by the detector 41 via the directional coupler 38 is input to the control unit 42 on the reception side. Based on the input detection signal, the control unit 42 exerts level adjustment to the attenuator 39.

### [Installation Example of Directional Coupler]

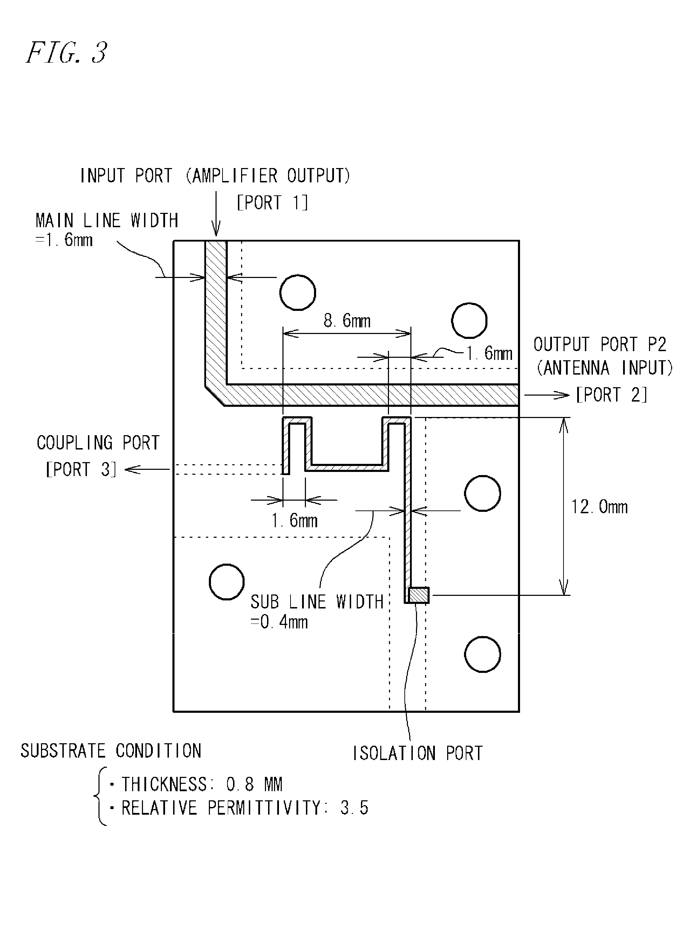

Fig. 3 is a plan view showing a specific installation example of the directional coupler 1 according to the present embodiment.
In connection with the directional coupler 1 of the installation example, the dimension of the main line 2 and that of the sub line 3 and the like are set as follows:

### (1) Substrate condition

Thickness: 0.8 mm
Relative permittivity: 3.5

### (2) Main line

Main line width: 1.6 mm

### (3) Sub line

Sub line width: 0.4 mm
First coupling line length: 1.6 mm
Second coupling line length: 5.4 mm
Impedance adjusting portion length: 12.0 mm

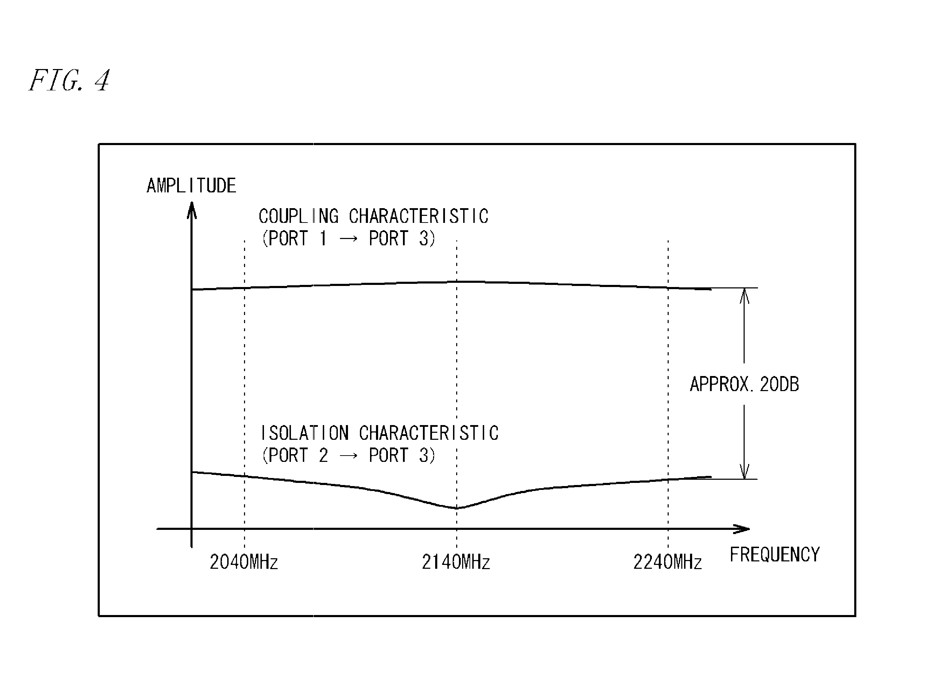

Fig. 4 is a graph showing the level characteristic of the directional coupler 1 according to the installation example shown in Fig. 3.
As shown in Fig. 4, with the directional coupler 1 according to the installation example, in a desired wide frequency band (2040 to 2240 MHz), an extremely high level difference of approximately 20 dB can be recognized between the coupling characteristic and the isolation characteristic.
Thus, according to the directional coupler 1 of the present invention, both the broadband characteristic and the high directivity characteristic of 20 dB or more can be achieved.

### [Variation]

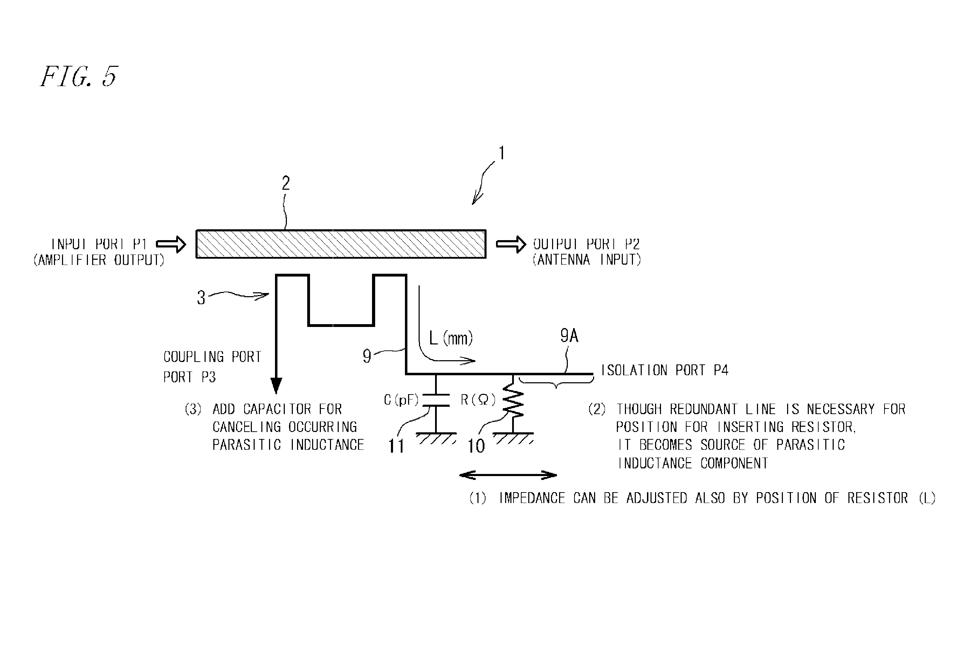

Fig. 5 is a plan view of a directional coupler 1 according to a variation of the present invention.
As shown in Fig. 5, the directional coupler 1 according to the variation is **characterized in that** a canceling-purpose capacitor 11 for canceling parasitic inductance components is connected to the impedance adjusting portion 9 of the sub line 3. In the following, a description will be given of the characteristic.

That is, in the directional coupler 1 according to the variation also, by finely adjusting the position of the resistor 10 connected to the impedance adjusting portion 9, the impedance of the sub line 3 can be adjusted.
However, in this case, in the impedance adjusting portion 9, in some cases, a redundant line 9A becomes necessary between the connection point of the resistor 10 and the isolation port P4. This redundant line 9A may act as a source of parasitic inductance, which may impair the isolation characteristic.

Accordingly, in the present variation, the capacitor 11 for canceling the parasitic inductance component attributed to the redundant line 9A is additionally connected to the impedance adjusting portion 9, such that the problem associated with the redundant line 9A is solved.
It is to be noted that, as the canceling-purpose capacitor 11, the one having a capacitance falling within a range of 0.5 pF to 0.75 pF, for example, can be used. In this case, the substantial characteristic of the directional coupler 1 is little affected.

### [Another Variation]

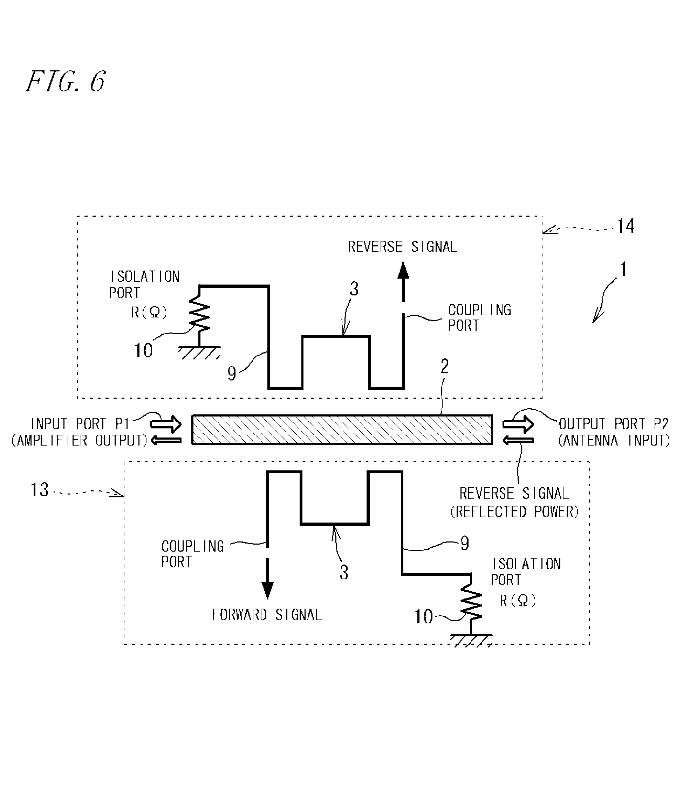

Fig. 6 is a plan view of a directional coupler 1 according to another variation of the present invention.
As shown in Fig. 6, the directional coupler 1 according to the present variation is **characterized in that**, a first coupler circuit 13 that couples a forward signal, and additionally, a second coupler circuit 14 which is inverted so as to be point-symmetric to the first coupler circuit 13 with respect to the main line 2 are provided to the dielectric substrate 21, such that the directional coupler 1 capable of monitoring also as to the VSWR (Voltage Standing Wave Ratio) is implemented. In the following, a description will be given of the characteristic.

In the variation shown in Fig. 6, the first coupler circuit 13 couples a forward signal (antenna input) passing through the main line 2. On the other hand, because the second coupler circuit 14 is structured similarly to the first coupler circuit 13 except that it is point-symmetrically inverted, it couples a signal (reflected power) reverse to the forward signal passing through the main line 2.
Accordingly, using the electric power obtained at the coupling port of the first coupler circuit 13, and the reflected power obtained at the coupling port of the second coupler circuit 14, the VSWR value can be calculated.

With the directional coupler 1 according to the present variation, because the coupler circuits 13 and 14 possessing the high isolation characteristic are disposed on the identical dielectric substrate 21, a VSWR monitor being small in size and being low in cost, and still having a great dynamic range can be structured.

It is to be noted that the term VSWR (voltage standing wave ratio) refers to the proportion of a high-frequency signal being partially reflected on a circuit when the signal passes through an electric device. The VSWR value showing "1" is an ideal state without any reflection. The greater the extent of reflection, the greater the value. This indicates a great signal loss and the like.
Accordingly, the communication device which handles high-frequency signals is required to have the lowest possible VSWR value. As for antennas and the like, a VSWR value of approximately 1.5 or less (i.e., the reflected power is 4% or less) is an index.

### INDUSTRIAL APPLICABILITY

The present invention is used for wireless communication technology for controlling the output of the high output power amplifier for transmission to communicate with a stable transmission output, and the present invention provides a directional coupler suitable for monitoring the output power of the high output power amplifier thereof.

## Claims

1. A directional coupler, structured with a microstripline including a main line having an input port and an output port, and a sub line having a coupling port and an isolation port, wherein
the sub line is made of a high impedance line narrower than the main line, and
the high impedance line has a first coupling line and a second coupling line each extending in parallel to the main line, a distance between the first coupling line and the main line being smaller than a distance between the second coupling line and the main line.

2. The directional coupler according to claim 1, wherein
the high impedance line has an intermediate perpendicular line that extends in a direction perpendicular to the main line, and that connects between an end of the first coupling line and an end of the second coupling line.

3. The directional coupler according to one of claims 1 and 2, wherein
the high impedance line includes an impedance adjusting portion longer than a distance between the second coupling line and the main line, the isolation port being provided at an end of the impedance adjusting portion.

4. A wireless communication apparatus comprising a transmission system that exerts a transmission power control, wherein
the transmission system includes the directional coupler according to one of claims 1 to 3 for monitoring a transmission output of a high output power amplifier structuring the transmission system.
